Europäisches Patentamt

European Patent Office

Office européen des brevets

(11) Veröffentlichungsnummer: **0 127 761**
A1

## (12) EUROPÄISCHE PATENTANMELDUNG

(21) Anmeldenummer: 84104807.7

(22) Anmeldetag: 28.04.84

(51) Int. Cl.³: **F 26 B 25/00**
F 26 B 13/00

(30) Priorität: 05.05.83 DE 3316418

(43) Veröffentlichungstag der Anmeldung:
12.12.84 Patentblatt 84/50

(84) Benannte Vertragsstaaten:
AT BE CH DE FR GB IT LI

(71) Anmelder: Süddeutsche Kühlerfabrik Julius Fr. Behr
GmbH & Co. KG.
Mauserstrasse 3
D-7000 Stuttgart 30(DE)

(72) Erfinder: Christ, Michael, Ing. grad.
Helmholtzweg 5
D-7000 Stuttgart 1(DE)

(74) Vertreter: Wilhelm, Hans-Herbert, Dr.-Ing. et al,
Patentanwälte Dr.-Ing. Hans-Herbert Wilhelm Dipl.-Ing.
Hanjörg Dauster Gymnasiumstrasse 31B
D-7000 Stuttgart 1(DE)

(54) Regenerativ-Wärmetauschersystem.

(57) Regenerativwärmetauschersystem zur Wärmerückgewinnung aus Trocknungsprozessen, wobei mehrere Einzeltrockner an eine gemeinsame Abluftleitung (3) angeschlossen sind und die in ihr noch enthaltene Wärmeenergie über einen ersten Wärmetauscher (6) an einen Wärmeträger abgeben. Dieser Wärmeträger wird den einzelnen Trocknern zugeführt und erwärmt dort über weitere Wärmetauscher (15) die zugeführte Frischluft. Die einzelnen Trockner müssen also nicht an eine Frischluft-Sammelleitung angeschlossen werden, und die Abführung des Kondensats kann für alle Trockner gemeinsam an dem ersten Wärmetauscher (6) vorgenommen werden.

EP 0 127 761 A1

- ; -

## Regenerativwärmetauschersystem
================================

Die Erfindung betrifft ein Regenerativwärmetauschersystem zur Wärmerückgewinnung aus Trocknungsprozessen, das aus mehreren Trocknern besteht, wobei jeder dieser Trockner an eine gemeinsame Abluftleitung angeschlossen ist, die über einen Wärmetauscher und dann nach außen geführt ist.

Trocknungsanlagen, beispielsweise zur Trocknung von Textilgut, haben einen hohen Energiebedarf, da die zugeführte Luft erwärmt werden muß und nach dem eigentlichen Trocknungsvorgang in noch erwärmtem Zustand in die Umgebungsluft entlassen wird. Angesichts der Energieknappheit und steigender Energiepreise ist es daher unwirtschaftlich, die zum Trocknen benutzte Luft nach dem eigentlichen Trocknungsvorgang ungenutzt abzuführen. Es ist daher schon verschiedentlich vorgeschlagen worden, die aus Trocknungsanlagen abgeführte Abluft zumindest zum teilweisen Erhitzen der zugeführten Frischluft zu verwenden. Solche Anlagen verwenden Wärmetauscher verschiedener Bauarten für den Wärmeübergang von der Abluft zur Frischluft. Ein Trockner dieser Art mit einem Regenerativwärmetauscher ist beispielsweise aus der DE-OS 30 12 880 bekannt. Dort ist vorgesehen, den Wärmetauscher in das Trocknergehäuse zu integrieren, wobei für den Wärmeübergang Profilbleche vorgesehen sind.

Mit einer derartigen Anlage läßt sich ein erheblicher Teil der in der Abluft noch vorhandenen Wärmeenergie zurückgewinnen. Die Frischluft braucht also nicht in dem Maße erwärmt werden, wie das ohne den Regenerativwärmetauscher nötig wäre. Allerdings ist diese Lösung für größere Anlagen nicht zufriedenstellend, da in jedem Trockner ein gesonderter Wärmetauscher erforderlich ist. Außerdem ist für jeden Trockner ein eigener Abluftkanal vorzusehen. Schließlich muß jeder der Trockner mit einer gesonderten Vorrichtung zur Abführung des in dem Wärmetauscher anfallenden Kondensats ausgerüstet werden. Das ist aufwendig.

Es ist deshalb auch schon bekannt geworden, einen mehreren Trocknern zugeordneten Wärmetauscher zu verwenden, wobei die Zuluft- und die Abluftleitungen sämtlicher Trockner mit diesem Wärmetauscher in Verbindung stehen. Der Wärmetauscher seinerseits hat eine zentrale Frischluftzufuhr und einen Abluftschacht. Eine derartige Anlage weist den Nachteil auf, daß die einzelnen Trocknerabschnitte nicht nur an eine Abluft-Sammelleitung, sondern auch an eine zu dem Wärmetauscher führende Frischluft-Sammelleitung angeschlossen werden müssen. Dabei ist ein erheblicher Materialaufwand notwendig. Auch ist der Wirkungsgrad einer solchen Anlage nicht optimal, da die in dem Wärmetauscher vorerwärmte Zuluft auf ihrem Weg zu den einzelnen Trocknern einer nicht erwünschten Abkühlung unterliegt.

Die Aufgabe der Erfindung besteht darin, ein Wärmetauschersystem der eingangs genannten Art so auszubilden, daß die Verlegung der aufwendigen Zuluft-Sammelleitungen überflüssig wird. Diese Aufgabe wird erfindungsgemäß dadurch gelöst, daß die Abluft die in ihr noch enthaltende Wärme in dem Wärmetauscher an einen Wärmeträger abgibt, der zu den einzelnen Trocknern geführt wird und dort über zweite Wärmetauscher die Frischluft erhitzt. Bei dem erfindungsgemäßen Wärmetauschersystem wird also ein zentraler Wärmetauscher verwendet, an dem die Abluft die in ihr noch enthaltene Wärme an einen Wärmeträger abgibt; außerdem ist jeder der Trockner mit je einem weiteren Wärmetauscher versehen, wo der Wärmeträger die Wärmeenergie an die Zuluft abgibt. Bei einer derartigen Anlage müssen die einzelnen Trockner somit nur an eine gemeinsame Abluft-Sammelschiene, nicht aber an eine Zuluft-Sammelschiene, angeschlossen werden. Als Wärmeträger wird bevorzugt ein Medium Verwendung finden, bei dem auf dem Weg zwischen dem zentralen Wärmetauscher und den Trocknern nur ein geringer Wärmeverlust eintritt.

Günstig ist es, für den Wärmeträger eine Flüssigkeit zu verwenden. Dabei findet bevorzugt Öl Verwendung, das den gestellten Forderungen in hohem Maße entspricht.

Die dem zentralen Wärmetauscher zugeführte Abluft führt in der Regel noch Wasserdämpfe mit sich, die sich an diesem Wärmetauscher als Kondensat niederschlagen. Dieses Kondensat wird zweckmäßig in einem unterhalb dieses Wärmetauschers vorgesehenen Kondensatabfluß gesammelt und abgeführt. Dieser Abfluß arbeitet zentral für die gesamte Anlage. Es ist daher nicht mehr notwendig, jedem Trockner einen eigenen Kondensatabfluß zuzuordnen.

Zur problemlosen Abführung der Abluft ist es weiterhin zweckmäßig, ein Radialgebläse vorzusehen. Zur Reinigung dieser Abluft von Festkörpern, die unter Umständen den zentralen Wärmetauscher verschmutzen könnten, kann außerdem vor diesem Wärmetauscher ein Flusensieb angeordnet werden. Auch die den einzelnen Trocknern zugeführte Frischluft kann in ähnlicher Weise ein Flusensieb passieren. Zwischen diesen Flusensieben und den den Einzeltrocknern zugeordneten Wärmetauschern können außerdem zweckmäßig Jalousieklappen und/oder Axialventilatoren angeordnet sein. Die Axialventilatoren dienen zur ausreichenden Versorgung der Trockner mit Frischluft. Außerdem kann durch Drehzahlregelung der Axialventilatoren eine Volumenanpassung zwischen Frisch- und Abluft vorgenommen werden. Dem gleichen Zweck dienen auch die Jalousieklappen.

Der Wärmeträgerkreislauf kann nach dem Prinzip der Wärmeumlaufkühlung aufgebaut sein. Zur Erhöhung des Wirkungsgrades ist es aber auch vorteilhaft, eine Pumpe in diesem Kreislauf anzuordnen.

Das erfindungsgemäße Regenerativwärmetauschersystem weist den Vorteil auf, daß die Abluft zentral der Wärmerückgewinnungsanlage zugeführt wird und die bei der Abkühlung der Abluft auftretende Kondensation außerhalb der Thermobehandlungszonen stattfindet. Die gesamten Reinigungsprobleme der Flusenfüller der Wärmetauscher werden gegenüber einem integrierten Wärmerückgewinnungssystem zentralisiert und wesentlich vereinfacht.

Weitere Merkmale und Vorteile des erfindungsgemäßen Wärmetauschersystems ergeben sich aus den Unteransprüchen sowie aus der Beschreibung zur Zeichnung, in der eine bevorzugte Ausführungsform der Erfindung dargestellt ist.

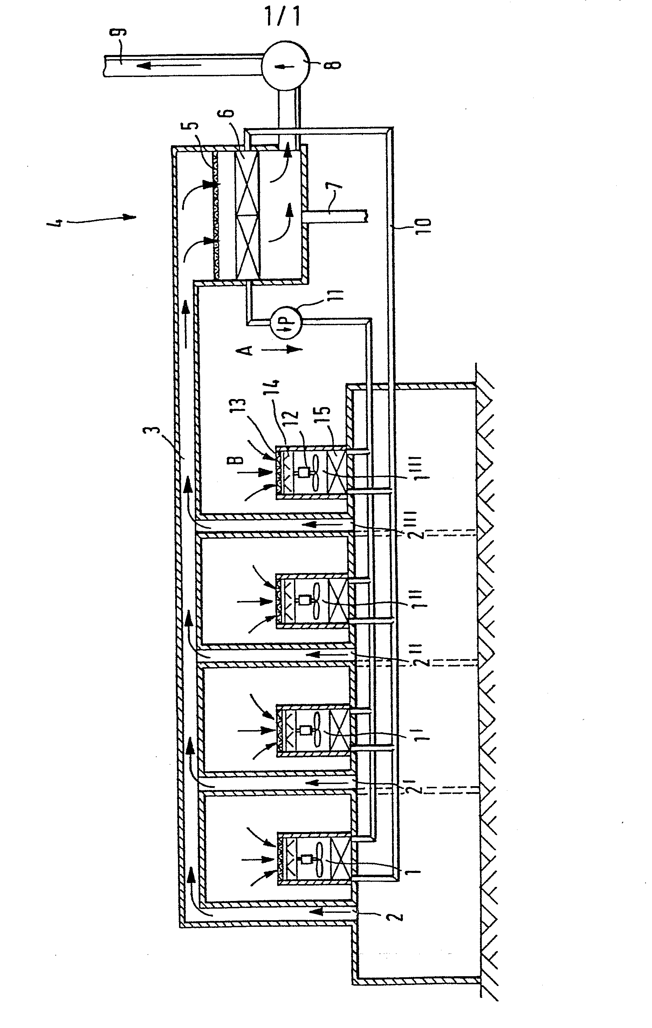

In der Zeichnung sind beispielshaft vier Einzeltrockner 1 bis 1''' dargestellt. Im Prinzip können dabei natürlich beliebig viele Einzeltrockner Verwendung finden. Die Abluft dieser Einzeltrockner wird über Kanäle 2 bis 2''' einer Abluft-Sammelleitung 3 zugeführt. Diese Sammelleitung 3 führt zu dem zentralen Teil 4 der Wärmerückgewinnungsanlage.

Die Abluft passiert dort zunächst ein Flusensieb 5, an dem eventuell von der Abluft mitgeführte Festkörper abgeschieden werden, um eine Verunreinigung des Wärmetauschers zu verhindern. Dieser Wärmetauscher ist mit 6 bezeichnet. Eventuell von der Abluft mitgeführte Wasserdämpfe kondensieren an dem Wärmetauscher und werden über einen Kondensatabfluß 7 abgeführt. Dieser Kondensatabfluß 7 arbeitet zentral für die gesamte Anlage, so daß den Einzeltrocknern keine getrennten Abflüsse zugeordnet werden müssen. Mit Hilfe eines Radialgebläses 8 wird die nun abgekühlte Abluft über eine Abluftleitung 9 abgeführt, zum Beispiel in einen Abluftkamin.

An den Wärmetauscher 6 ist ferner der Wärmeträger-Kreislauf 10 angeschlossen. Als Wärmeträger findet dabei ein Stoff Verwendung, der die in dem Wärmeträger 6 aufgenommene Energie unter möglichst geringen Verlusten bis zu den Einzeltrocknern transportieren kann. Bevorzugt wird dabei eine Flüssigkeit, insbesondere Öl, verwendet. Dieses Öl wird mittels einer Pumpe 11 in Richtung des Pfeiles A zu den Einzeltrocknern gefördert.

Für die Erläuterung der an den Einzeltrocknern vorgesehenen Anlagenteile wird beispielshaft der Trockner 1''' ausgewählt. Dieser Trockner 1''' ist mit einem Axialventilator 12 ausgerüstet, der Frischluft in Richtung der Pfeile B ansaugt. Dabei hat jeder Einzeltrockner einen gesonderten Frischlufteinlaß, so daß keine Frischluft-Sammelleitung vorgesehen werden muß. Die angesaugte Luft passiert zunächst ein Flusensieb 13, das diese Luft von festen Bestandteilen reinigen soll. Sie durchströmt sodann eine Jalousieklappe 14. Sowohl diese Jalousieklappe 14 als auch der Axialventilator 12 können zur Regelung der zugeführten Luftmenge verwendet werden. Die Frischluft tritt sodann in den Wärmetauscher 15 und nimmt dort die von dem Wärmeträger mitgeführte Energie auf. Sie muß natürlich bis zur Arbeitstemperatur noch weiter aufgeheizt werden, doch sind diese Heizeinrichtungen konventioneller Art und daher nicht dargestellt. Sie wird dann dem Trocknungsprozeß zugeführt.

Jeder Trockner 1, 1', 1" und 1''' kann dabei Luft in einen eigenen Trockenraum unterhalb des Wärmetauschers 15 blasen, wie das mit gestrichelten Trennwänden angedeutet ist, aus dem die Abluft auch wieder abgesaugt wird. Möglich ist aber auch die Beaufschlagung eines gemeinsamen Trocknungsraumes durch alle oder einen Teil der Trockner 1, 1', 1" und 1'''.

Ansprüche

1. Regenerativwärmetauschersystem zur Wärmerückgewinnung aus Trockenprozessen, das aus mehreren Trocknereinheiten besteht, die mit erwärmter Frischluft arbeiten, wobei jede dieser Trocknereinheiten an eine gemeinsame Abluftleitung angeschlossen ist, die über einen Wärmetauscher geführt ist, dadurch gekennzeichnet, daß die Abluft die in ihr noch enthaltende Wärme in dem Wärmetauscher (6) an einen Wärmeträger abgibt, der zu den einzelnen Trocknereinheiten (1 bis 1''') geführt wird und dort über zweite Wärmetauscher (15) die Frischluft erhitzt, die jeweils den Trocknereinheiten zugeordnet sind.

2. Regenerativwärmetauschersystem nach Anspruch 1, dadurch gekennzeichnet, daß als Wärmeträger eine Flüssigkeit verwendet wird.

3. Regenerativwärmetauschersystem nach Anspruch 2, dadurch gekennzeichnet, daß als flüssiger Wärmeträger Öl verwendet wird.

4. Regenerativwärmetauschersystem nach einem der Ansprüche 1 bis 3, dadurch gekennzeichnet, daß unterhalb des ersten Wärmetauschers (6) ein Kondensatabfluß (7) vorgesehen ist.

5.  Regenerativwärmetauschersystem nach mindestens einem der Ansprüche 1 bis 4, dadurch gekennzeichnet, daß die Abluft über ein Radialgebläse (8) abgeführt wird.

6.  Regenerativwärmetauschersystem nach mindestens einem der vorhergehenden Ansprüche, dadurch gekennzeichnet, daß die Abluft vor dem ersten Wärmetauscher (6) über ein Flusensieb (5) geführt ist.

7.  Regenerativwärmetauschersystem nach mindestens einem der Ansprüche 1 bis 6, dadurch gekennzeichnet, daß die den Trocknern zugeführte Frischluft über je ein Flusensieb (13) geführt ist.

8.  Regenerativwärmetauschersystem nach Anspruch 7, dadurch gekennzeichnet, daß nach den Frischluft-Flusensieben (13) Jalousieklappen (14) angeordnet sind.

9.  Regenerativwärmetauschersystem nach Anspruch 8, dadurch gekennzeichnet, daß zwischen den Jalousieklappen (14) und den zweiten Wärmetauschern (15) Axialventilatoren (12) angeordnet sind.

10. Regenerativwärmetauschersystem nach einem der Ansprüche 2 bis 9, dadurch gekennzeichnet, daß im Wärmeträger-Kreislauf eine Pumpe (11) vorgesehen ist.

**0127761**

**Europäisches**
**Patentamt**

**EUROPÄISCHER RECHERCHENBERICHT**

Nummer der Anmeldung

EP 84 10 4807

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| Y | US-A-4 253 825 (FASANO) <br> * Insgesamt * | 1 | F 26 B 25/00 <br> F 26 B 23/00 |
| A | | 6-9 | |
| | --- | | |
| Y | FR-A-2 346 657 (JOSGLADE) <br> * Insgesamt * | 1 | |
| A | | 2,8,10 | |
| | --- | | |
| A | FR-A-2 499 831 (MULLER) <br> * Seite 2, Zeile 24 - Seite 3, Zeile 9; Seite 3, Zeilen 29-37 * | 1,2,10 | |
| | --- | | |
| A | GB-A-2 000 263 (BRÜCKNER) <br> * Seite 2, Zeilen 29-70 * | 1-3 | RECHERCHIERTE SACHGEBIETE (Int. Cl. 3) |
| | --- | | |
| A | FR-A-2 304 045 (LA VENTILATION INDUSTRIELLE ET MINIERE) | | F 26 B |
| | ----- | | |

Der vorliegende Recherchenbericht wurde für alle Patentansprüche erstellt.

| Recherchenort <br> DEN HAAG | Abschlußdatum der Recherche <br> 17-08-1984 | Prüfer <br> DE RIJCK F. |
|---|---|---|